(19) Europäisches Patentamt / European Patent Office / Office européen des brevets

(11) **EP 3 890 513 B1**

(12) **EUROPEAN PATENT SPECIFICATION**

(45) Date of publication and mention
of the grant of the patent:
**22.01.2025  Bulletin 2025/04**

(21) Application number: **19802226.1**

(22) Date of filing: **20.11.2019**

(51) International Patent Classification (IPC):
**A23L 2/62** (2006.01)    **A23C 11/06** (2025.01)
**A23L 2/66** (2006.01)    **A23J 3/14** (2006.01)
**A23J 3/28** (2006.01)    **A23L 23/00** (2016.01)

(52) Cooperative Patent Classification (CPC):
(C-Sets available)
**A23L 2/66; A23C 11/06; A23G 9/38; A23J 3/14;
A23L 2/62; A23L 23/00; A23L 29/206;
A23L 33/185;** A23V 2002/00         (Cont.)

(86) International application number:
**PCT/EP2019/081947**

(87) International publication number:
**WO 2020/114776 (11.06.2020 Gazette 2020/24)**

(54) **FOOD OR BEVERAGE PRODUCT WITH AGGLOMERATED PEA PROTEIN**

LEBENSMITTEL- ODER GETRÄNKEPRODUKT MIT AGGLOMERIERTEM ERBSENPROTEIN

PRODUIT D'ALIMENTS OU DE BOISSONS COMPRENANT DE LA PROTÉINE DE POIS AGGLOMÉRÉE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority:  03.12.2018  EP 18209814

(43) Date of publication of application:
13.10.2021  Bulletin 2021/41

(73) Proprietor: **Société des Produits Nestlé S.A.
1800 Vevey (CH)**

(72) Inventors:
• **SCHMITT, Christophe, Joseph, Etienne**
 **1077 SERVION (CH)**
• **AMAGLIANI, Luca**
 **1010 Lausanne (CH)**
• **VAN DE LANGERIJT, Tessa, Marianne**
 **4105 Culemborg (NL)**

(74) Representative: **Vossius & Partner
Patentanwälte Rechtsanwälte mbB
P.O. Box 86 07 67
81634 München (DE)**

(56) References cited:
WO-A1-2018/075589    WO-A1-2018/224539
WO-A1-2019/115280    US-A1- 2002 039 617
US-A1- 2014 255 583

• JEAN-LUC MESSION ET AL: "Interactions in casein micelle - Pea protein system (part I): Heat-induced denaturation and aggregation", FOOD HYDROCOLLOIDS, vol. 67, 22 December 2015 (2015-12-22), NL, pages 229 - 242, XP055395380, ISSN: 0268-005X, DOI: 10.1016/j.foodhyd.2015.12.015
• P.J. SHAND ET AL: "Physicochemical and textural properties of heat-induced pea protein isolate gels", FOOD CHEMISTRY, vol. 102, no. 4, 1 January 2007 (2007-01-01), NL, pages 1119 - 1130, XP055569548, ISSN: 0308-8146, DOI: 10.1016/j.foodchem.2006.06.060
• NANNAN CHEN ET AL: "Thermal aggregation and gelation of soy globulin at neutral pH", FOOD HYDROCOLLOIDS, vol. 61, 24 June 2016 (2016-06-24), NL, pages 740 - 746, XP055569547, ISSN: 0268-005X, DOI: 10.1016/j.foodhyd.2016.06.028

EP 3 890 513 B1

(52) Cooperative Patent Classification (CPC): (Cont.)

C-Sets
A23V 2002/00, A23V 2200/14, A23V 2250/1578,
A23V 2250/548, A23V 2300/40

## Description

## Field of the invention

The present invention relates to a method of producing a food or beverage product, in particular to a method for forming agglomerated pea proteins in an ingredient composition. The invention also relates to a food or beverage product comprising agglomerated pea proteins.

## Background

More and more consumers are concerned by synthetic or artificial additives in food products. Thus, there is a need to provide texture and mouthfeel in food and beverage products without the use of synthetic ingredients or ingredients that the consumer may perceive as synthetic. There is also a need for food and beverages products exhibiting nutritional balance of macronutrients while delivering great taste and texture.

The preparation of particles of proteins, such as pea protein, is disclosed in e.g., US 2002/039617 A1.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

## Summary of the invention

An object of the present invention is to improve the state of the art and to provide an improved solution or at least to provide a useful alternative. The object of the present invention is achieved by the subject matter of the independent claims. The dependent claims further develop the idea of the present invention.

The inventors have surprisingly found that by the use of specific levels of pea protein and divalent cations followed by heat treatment they can generate agglomerates which provide an increased viscosity with a smooth mouthfeel. The agglomerates deliver optimum sensorial properties while allowing a reduction of the total fat content in the product. In addition, the described invention enables formulation of texturized products without the use of additional stabilizers or hydrocolloids.

Accordingly, the present invention provides in a first aspect a method of producing a food or beverage product, the method comprising; providing an aqueous ingredient composition comprising pea protein at a concentration of 1.0 to 6 wt.%; adding to the ingredient composition 4.0 - 20 mM of divalent cations available to complex the pea protein; and subsequently heat treating the ingredient composition at a pH of 6.6 - 7.3 to form agglomerates comprising pea protein wherein the heat treatment is performed at a temperature of 80°C to 125°C for a period of 30 seconds to 20 minutes, or at a temperature of above 125 °C for 3 - 45 seconds.

In a second aspect, the invention relates to a food or beverage product comprising agglomerated pea protein, the agglomerated pea protein having a D[4,3] mean diameter as measured by laser diffraction of between 2 and 50 microns and a particle size distribution span $(D_{v0.9}-D_{v0.1})/D_{v0.5}$ of less than 10.

## Brief description of the drawings

Figure 1 shows photographs of 3.5 wt.% pea protein solutions with different amounts of $Ca^{2+}$ after heat treatment

Figure 2 is a graph showing the influence of $Ca^{2+}$ concentration on the soluble protein content (SPC) of 3.5 wt.% pea protein solutions after heat treatment.

Figure 3 shows the influence of $Ca^{2+}$ on the particle size distribution of 3.5 wt.% pea protein solutions after heat treatment, as represented by D[4,3] (bars), and the span (black boxes) for different concentrations of calcium.

Figure 4 shows the amount of bound $Ca^{2+}$ for different amounts of calcium added to a 3.5 wt.% pea protein solutions and heat treated.

Figure 5 shows confocal laser scanning microscopy pictures of 3.5 wt.% pea protein solutions with different amounts of $Ca^{2+}$ after heat treatment. Proteins were labeled with Fast Green FCF.

Figure 6 shows viscosity [mPa.s] measured at a shear rate of 13.9 $s^{-1}$ as a function of $Ca^{2+}$ concentration for 3.5 wt.% pea protein solutions after heat treatment.

## Detailed description of the invention

When carrying out experiments on the effect of divalent cation addition, in particular calcium, to pea protein aggregation and viscosity build up, it was surprisingly found that there is a critical range of divalent cation addition which, upon heating, leads to optimum protein aggregation without precipitation or gelation of the formed aggregates and leads to considerable viscosity increase. When this optimum concentration of calcium is passed, the system either exhibits over-aggregation, resulting in precipitation, gelation, or a decrease in viscosity.

Consequently the present invention relates in part to a method of producing a food or beverage product, the method comprising; providing an aqueous ingredient composition comprising pea protein at a concentration of 1.0 to 6 wt.% (for example 1.5 to 5 wt.%, for example 2 to 4.5 wt.%, for further example 3 to 4 wt.%); adding to the ingredient composition 4.0 - 20 mM of divalent cations available to complex the pea protein (for example 5 - 15 mM, for example 5 - 12 mM, for example 6 - 10 mM, for example 7 - 9 mM, for further example 7.5 to 8.5 mM); and subsequently heat treating the ingredient composition at a pH of 6.6 - 7.3 (for example 6.8 - 7.2) to form agglomerates comprising pea protein wherein the heat treatment is performed at a temperature of 80°C to 125°C for a period of 30 seconds to 20 minutes, or at a temperature of above 125 °C for 3 - 45 seconds. The level of divalent cations added provides the desired increase in viscosity without causing sensory defects such as metallic taste or soapiness.

Divalent cations available to complex the pea protein are for example divalent cations that have not been complexed by another component of the aqueous ingredient composition. The quantity of divalent cations available to complex the pea protein may be determined by combining all the components of the ingredient composition apart from the pea protein and adding a measured quantity of divalent cations, for example to a concentration of 10 mM. The free divalent cation concentration of the ingredient composition is then measured with an ion-selective electrode and the quantity of bound divalent cations can be calculated. In performing the method of the invention, the quantity of divalent cations available to complex with the pea protein will be the total amount added minus the quantity observed to be bound in the absence of pea protein.

The pH may be adjusted before or after adding the divalent cations to the ingredient composition. If the pH is adjusted before adding the divalent cations then the pH decrease due to binding of the divalent cations should be anticipated to result in a pH of the ingredient composition of 6.6 - 7.3 after adding the divalent cations. Accordingly, in an embodiment of the invention the method comprises; providing an aqueous ingredient composition comprising pea protein at a concentration of 1.0 to 6 wt.%; adding to the ingredient composition 4.0 - 20 mM of divalent cations available to complex the pea protein; adjusting the pH; and subsequently heat treating the ingredient composition at a pH of of 6.6 - 7.3 to form agglomerates comprising pea protein wherein the heat treatment is performed at a temperature of 80°C to 125°C for a period of 30 seconds to 20 minutes, or at a temperature of above 125 °C for 3 - 45 seconds.

In the present context unless otherwise indicated % of a component means the % of weight based on the weight of the composition, i.e. weight/weight %.

In an embodiment the agglomerates have a D [4,3] mean diameter as measured by laser diffraction of 2 to 50 microns, for example a D[4,3] mean diameter as measured by laser diffraction of 4 to 40 microns, for example 5 to 30 microns, for example 6 to 20 microns, for further example 8 to 12 microns. The agglomerate particle size distribution may for example be measured using Mastersizer 3000 (Malvern Intruments, UK) or an equivalent measurement system. For the measurements a sample may e.g. be dispersed in the Hydro SM measuring cell until an obscuration rate of 9-10% is obtained and then analysed in the Mastersizer. In the current invention the term D[4,3] is used conventionally to refer to the volume-weighted mean diameter of the particle distribution, sometimes called the De Brouckere mean diameter. It is advantageous that the method of the invention can produce relatively small particles as these are less easily perceived in the mouth and so provide an increase in viscosity with a smooth mouthfeel, without the aggregates causing grittiness.

The agglomerates generated according to the method of the invention have a narrow size range. Together with a small particle size this also provides viscosity increase with a smooth mouthfeel. In an embodiment, the particle size distribution span of the agglomerates is 0.1 to 10, for example 0.5 to 5. The span is equal to $(D_{v0.9}-D_{v0.1})/D_{v0.5}$. The $D_{v0.5}$ is the median particle size for a volume distribution, 50% of the population falling below this value. $D_{v0.9}$ and $D_{v0.1}$ are the values below which 90% and 10% of the population fall respectively.

In an embodiment the ingredient composition is subjected to homogenization, for example the ingredient composition comprising pea protein may be subjected to homogenization before the addition of divalent cations to ensure complete solubilisation of the protein.

The pea protein according to the invention may be pea protein isolated from or extracted from green, yellow or purple peas *(Pisum sativum)*. The pea protein may be pea protein fraction. The pea protein may be from the seeds of green peas. For example, the pea protein may be a vegetable protein material isolated from pea with a protein content greater than 80 % on a dry weight basis. In the method according to the invention, the solubility of the pea protein may have been improved with physical treatment (e.g. heating, homogenization). In an embodiment the pea protein is a pea protein concentrate or a pea protein isolate.

In an embodiment of the invention the divalent cations are selected from the group consisting of calcium cations, magnesium cations and combinations thereof. These divalent cations are food grade and do not readily cause oxidation of fat. For example the divalent cations according to the invention may be calcium cations.

The divalent cations may be added in the form of a mineral salt. In an embodiment the divalent cations are provided as a salt with an anion selected from the group consisting of chloride, hydroxide, carbonate, bicarbonate, phosphate, stearate, malate, glycerophosphate, lactate, acetate, fumarate and gluconate. For example the divalent cations may be provided as a salt with an anion selected from the group consisting of chloride, lactate, carbonate, bicarbonate and combinations of these. The salt may be calcium chloride. To provide calcium from a natural source, the calcium may be obtained from concentration minerals from milk after separation of the protein, fat and lactose by e.g. membrane fractionation.

In an embodiment the ingredient composition after heat treatment has a total solid content of 2 to 35 %. That is to say, the mass of all the non-water components is 2 to 35 % of the total mass. Increasing the total solids promotes aggregation. For example the total solid content may be from 2 to 10 %, for further example from 6 to 8 %. The total solids should not be too high otherwise gelation and precipitation of the protein can occur. Without wishing to be bound by theory, this is believed to be due to decreasing the spacing between proteins.

The total solids may be increased by introducing carbohydrates such as sucrose, lactose, inulin, fructo-oligosaccharides, starch or hydrolysed starch products such as maltodextrin and glucose syrup.

In an embodiment the content of soluble protein in the food or beverage product is below or equal to 80 wt.% in relation to the total protein content, for example below or equal to 60, 40, 30 or 20 wt.% in relation to the total protein content. The method of the invention leads to the majority of the proteins being part of the aggregated/agglomerated structures. For example the content of soluble pea protein in the food or beverage product may be below or equal to 30 wt.% in relation to the total pea protein content. In an embodiment the content of soluble protein in the heat treated ingredient composition may be below or equal to 30 wt.% in relation to the total protein content of the heat treated ingredient composition. For example the content of soluble pea protein in the heat treated ingredient composition may be below or equal to 30 wt.% in relation to the total pea protein content of the heat treated ingredient composition.

In an embodiment the heat treated ingredient composition is dried into powder by means of freeze drying, spray drying or roller-drying. It is advantageous that the method of the invention can provide food or beverage products in powder form, for example powders to be reconstituted with water (or other aqueous liquids) into a product having good textural attributes such as viscosity with a smooth mouthfeel.

In one embodiment of the invention the ingredient composition comprises from 0 to 36 wt.% fat, for example 1.0 to 20 wt.%, for example 3.0 - 15 wt.%, for further example 5 to 10 wt.% of fat. It has been found that even with low amounts of fat the texture of the product is creamy due to the agglomeration created within the product.

In the context of the present invention, the term "fat" refers to materials primarily composed of triglycerides. Fats are the chief component of animal adipose tissue and many plant seeds. Fats which are generally encountered in their liquid form are commonly referred to as oils. In the present invention the terms oils and fats are interchangeable.

In an embodiment, the ingredient composition may comprise fat selected from the group consisting of palm kernel oil, canola oil, soy bean oil, sunflower oil, safflower oil, cotton seed oil, palm oil, milk fat, corn oil, coconut oil and combinations of these.

In an embodiment of the invention, further ingredients are added to the ingredient composition appropriate for the product type. These further ingredients may comprise hydrocolloids, emulsifiers, buffers, sweeteners and/or flavours which may be hydrated in water (e.g., at between 40°C and 90°C) under agitation, with addition of melted fat if desired. Where the method of the invention comprises homogenization, such further ingredients are added before homogenization. Adding liquid fats before homogenization allows an emulsion of fine oil droplets to be formed.

An aspect of the invention provides a food or beverage product obtainable, for example obtained, by the method of the invention.

An aspect of the invention provides a food or beverage product comprising calcium or magnesium and agglomerated pea protein, the agglomerated pea protein having a D[4,3] mean diameter as measured by laser diffraction of 2 to 50 microns, for example 4 to 40 microns, for example 5 to 30 microns, for example 6 to 20 microns, for further example 8 to 12 microns and a particle size distribution span of 0.1 to 10, for example 0.5 to 5.

In an embodiment, the food or beverage product of the invention may be suitable for vegetarians or vegans.

The product of the invention may further include one or more additional ingredients such as flavours, sweeteners, colorants, antioxidants (e.g. lipid antioxidants), or a combination thereof.

In an embodiment, the food or beverage product is a liquid and comprises pea protein at a concentration of 1.0 to 6 wt. % (for example 1.5 to 5 wt.%, for example 2 to 4.5 wt.%, for further example 3 to 4 wt.%). The food or beverage product may have a pH of 6.6 - 7.3, for example 6.8 - 7.2.

In an embodiment, the food or beverage product is a liquid and comprises divalent cations at a level of 4.0 - 20 mM (for example 5 - 15 mM, for example 5 - 12 mM, for example 6 - 10 mM, for example 7 - 9 mM, for further example 7.5 to 8.5 mM). For example, the food or beverage product may be a liquid and comprise divalent cations complexed with pea protein, the divalent cations being present at a level of 4.0 - 20 mM (for example 5 - 15 mM, for example 5 - 12 mM, for example 6 - 10 mM, for example 7 - 9 mM, for further example 7.5 to 8.5 mM).

In an embodiment, the food or beverage product is a powder and comprises pea protein at a level from 0.5 to 70 wt.%, for example 1 to 50 wt.%, for further example 2 to 20 wt.%.

The formation of pea protein agglomerates according to the invention improves food or beverage texture/mouthfeel and provides a pleasant, smooth creamy taste even for food or beverages with reduced sugar and/or reduced fat. A disadvantage of hydrocolloid thickeners in liquid beverages that are stored or served cold is that the hydrocolloids become too thick when stored for a long time at refrigerator temperature or provide an appropriate texture at room temperature but become over-thick when chilled before serving. The agglomerates according to the invention cope better with providing a stable texture under conditions of temperature fluctuation than many hydrocolloids. Often complex hydrocolloids are used to stabilize beverage products, the complex hydrocolloids being unfamiliar to consumers and therefore not desirable. The food or beverage product of the invention may comprise polysaccharide hydrocolloid thickeners with good consumer acceptance selected from the group consisting of pectin, acacia gum, guar gum and combinations of these, for example pectin. In an embodiment, the food or beverage product contains less than 0.001 wt.% polysaccharides other than pectin, for example less than 0.001 wt.% polysaccharides. In the context of the present invention the term polysaccharide refers to saccharide polymers of more than 10 monosaccharide units.

The food or beverage product of the invention may be free from synthetic emulsifiers. For example the product of the invention may be free from added monoacylglycerols, diacylglycerols, diacetylated tartaric acid esters of monoglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, succinic acid esters of monoglycerides and diglycerides, lactic acid esters of monoglycerides and diglycerides, and sucrose esters of fatty acids.

In one embodiment, the food or beverage product of the invention comprises fat. For example the fat may be selected from the group consisting of coconut oil, high oleic canola oil, high oleic soybean oil, high oleic sunflower oil, high oleic safflower oil and combinations of these. The fat may have a solid fat content of less than 1% at 4 °C. This provides good stability of liquid products at temperatures such as those that might be encountered in a refrigerator as solidification of the fat can lead to precipitation. The solid fat content may be measured by pulsed NMR, for example according to the IUPAC Method 2.150 (a), method without special thermal pre-treatment [International Union of Pure and Applied Chemistry, Standard Methods for the Analysis of Oils, Fats and Derivatives, 7th Revised and Enlarged Edition (1987)]. The fat may be present in an amount of at most about 20 wt.%, the amount of fat in the product of the invention may for example be between about 0 wt.% and about 20 wt.%, for example between 6 wt.% and 12 wt.%. In an embodiment the food or beverage product of the invention has less than 3 g of fat per 100 g.

The food or beverage product according to the present invention may comprise a buffering agent. In the case of products such as creamers, the buffering agent can prevent undesired creaming or precipitation of the product when added into a hot, acidic environment such as coffee. In the case of products such as ready-to-drink beverages the buffering agent counteracts acidity changes over the shelf-life of the product. The buffering agent can for example be monophosphates, diphosphates, sodium mono- and bicarbonates, potassium mono- and bicarbonates, or a combination thereof. The buffering agent may be present in an amount of 0.1 to 3% by weight of the food or beverage product. The buffering agent comprised in the product of the invention may be citrate and bicarbonate which are familiar to consumers and so have high levels of acceptance. A liquid product of the invention may comprise bicarbonate at a level between 0.02 and 1 wt.%, for example between 0.05 and 0.5 wt.%, for further example between 0.07 and 0.15 wt.%. The liquid product of the invention may comprise citrate present at a level between 0.05 and 2.5 wt.%, for example between 0.13 and 1.25 wt.%, for further example between 0.18 and 0.38 wt.%. A powder product of the invention may comprise bicarbonate at a level between 0.01 and 0.4 wt.%, for example between 0.02 and 0.2 wt.%, for further example between 0.03 and 0.06 wt.%. The powder product of the invention may comprise citrate at a level between 0.02 and 1 wt.%, for example between 0.05 and 0.5 wt.%, for further example between 0.07 and 0.15 wt.%. The citrate may be provided in the form of a salt selected from the group consisting of potassium citrate, sodium citrate, calcium citrate, magnesium citrate and combinations of these. The citrate may be provided in the form of citric acid, for example comprised within citrus juice such as lemon juice. The bicarbonate may be provided in the form of a salt selected from the group consisting of potassium bicarbonate, sodium bicarbonate and combinations of these. The buffering agents comprised in the product of the invention may be for example citrate provided in the form of potassium citrate and bicarbonate provided in the form of sodium bicarbonate (baking soda).

A liquid beverage according to the invention is physically stable and has reduced phase separation issues (e.g., creaming, gelation or sedimentation) during storage at refrigeration temperatures (e.g., about 4 °C), room temperature (e.g., about 20 °C) and elevated temperatures (e.g., about 30 to 38 °C). The liquid beverage can have a shelf-life stability such as at least 6 months at 4°C and/or at 20°C, 6 months at 30 °C, and 1 month at 38 °C. Stability may be evaluated by visual inspection of the product after storage.

In an embodiment the food or beverage product is a creamer. Creamers are widely used as whitening agents with hot and cold beverages such as, for example, coffee, cocoa and tea. They are commonly used in place of milk and/or dairy cream. Creamers may come in a variety of different flavours and provide mouthfeel, body, and a smoother texture. The creamer according to the present invention can be in liquid or powder form. A liquid creamer may be intended for storage at ambient temperatures or under refrigeration, and should be stable during storage without phase separation, creaming, gelation and sedimentation. The creamer should also retain a constant viscosity over time. When added to cold or hot beverages such a coffee or tea, the creamer should disperse rapidly, provide a good whitening capacity, and remain stable with no feathering and/or sedimentation while providing a superior taste and mouthfeel. Creamers may also be included in culinary products such as soup.

A creamer according to the invention may comprise sucrose, emulsifiers, stabilizers, buffer salts, sweeteners and aroma. In addition the creamer may advantageously comprise emulsifiers that are protein not in the form of agglomerates.

In an embodiment the food or beverage product is a ready-to-drink beverage product, for example a shelf-stable ready-to-drink beverage. By a ready-to-drink beverage is meant a beverage in liquid form ready to be consumed without further addition of liquid.

A ready-to-drink beverage may be subjected to a heat treatment to increase the shelf life or the product, UHT (Ultra High Temperature) treatment, HTST (High Temperature Short Time) pasteurization, batch pasteurization, or hot fill.

A food or beverage product according to the invention (for example a creamer or ready-to-drink beverage) may comprise any other suitable ingredients known in the art, such as ingredients selected from the group consisting of sweeteners (including sugarless sweeteners), aromas/flavours, milk, stabilizers, colours and combinations of these. Sweeteners can include, for example, sucrose, fructose, dextrose, maltose, dextrin, levulose, tagatose, galactose, corn syrup solids and other natural or artificial sweeteners. Sugarless sweeteners can include sugar alcohols such as maltitol, xylitol, sorbitol, erythritol, mannitol, isomalt, lactitol, hydrogenated starch hydrolysates, and the like, alone or in combination. The sweetener may be present from 5-90% by weight of the food or beverage product, for example from 20-90%, for further example from 20-70%. In an embodiment, the food or beverage product has less than 0.5 g of sugars per serving. The food or beverage product may for example have less than 0.5 g sugars per 100 g.

In an embodiment the food or beverage product is a dairy based product such as ice cream or frozen confection, dairy concentrates or desserts. The food or beverage product may be non-dairy version of a product that is traditionally dairy, for example a plant-protein non-dairy ice cream, plant-protein non-dairy frozen confection, plant-protein dairy-style concentrate or plant-protein dairy-style dessert.

In an embodiment the food or beverage product is a non-dairy plant-milk.

In an embodiment the food or beverage product is a culinary sauce.

Those skilled in the art will understand that they can freely combine all features of the present invention disclosed herein. In particular, features described for the product of the present invention may be combined with the method of the present invention and vice versa. Further, features described for different embodiments of the present invention may be combined. Where known equivalents exist to specific features, such equivalents are incorporated as if specifically referred to in this specification.

Further advantages and features of the present invention are apparent from the figures and non-limiting examples.

EXAMPLES

Materials

Pea protein isolate (NUTRALYS® S85F; batch#:620126) was purchased from Roquette (Lestrem, France). Calcium chloride dihydrate (CaCl$_2$) was purchased from Sigma-Aldrich (St. Louis, Missouri, USA). NaOH and HCl solutions were purchased from Merck KGaA (Darmstadt, Germany). The protein assay dye reagent concentrate (Cat. # 500-0006) used for the Bradford assay was purchased from Bio-Rad Laboratories GmbH (Munich, Germany).

Preparation and heat treatment of protein dispersion in the presence of CaCl$_2$

Protein stock dispersions were prepared by dispersing the protein powder in Milli-Q water (8 wt%, protein) for 2 hours under magnetic stirring at 20°C. The stock dispersion was subsequently homogenized (double pass) using a PandaPlus Homogenius 2000 (GEA Westfalia Separator Group GmbH, Oelde, Germany) with first and second stage pressures of 50 and 250 bars, respectively. The stock dispersion was then split into sub-dispersions to which different amounts of Milli-Q water and CaCl$_2$ were added. The pH of these dispersions was then adjusted to 7.0 using 0.1 M NaOH or HCl, as needed, and Milli-Q water was added to reach 3.5 wt% protein and the required level of CaCl$_2$ (0-10 mM). These dispersions (250 mL) were transferred to 250 mL sealed glass bottles and placed in a water bath where they were heated at 95°C for 15 min under magnetic stirring, and afterwards cooled down on ice to 20°C.

Microstructure by Confocal Laser Scanning Microscopy (CLSM)

The microstructure of the protein-based dispersions after heat treatment was analyzed using a LSM 710 confocal laser scanning microscope (CLSM) upgraded with an Airyscan detector (Carl Zeiss, Oberkochen, Germany). Proteins were fluorescently labelled by adding 10 μL of 1% (w/v) Fast Green FCF (Sigma-Aldrich, Saint Louis, MO, USA) in ethanol, respectively, into 1 mL of heated dispersion. The fluorescently labelled samples (100 μL) were placed inside a 1 mm deep plastic chamber closed by a glass slide coverslip to prevent compression and drying artefacts. Imaging of the proteins was performed at an excitation wavelength of 633 nm and an emission wavelength of 645 nm (long-pass filter). Acquisition and treatment of the images were performed using the Zen 2.1 software (Carl Zeiss, Oberkochen, Germany).

Particle size by laser diffraction

The particle size of the protein-based dispersions after heat treatment was analysed by static light scattering using a Mastersizer 3000 (Malvern Instruments, Malvern, Worcestershire, United Kingdom) comprising a reverse Fourier lens with an effective confocal length of 300 mm, a He-Ne red light source (633 nm), and a LED blue light source (470 nm). Particle and dispersant refractive indices of 1.47 (sunflower oil) and 1.33 (water), respectively, were selected. The dispersions were added dropwise to the Hydro SM sample dispersion unit containing Milli-Q water until a laser obscuration of 10% ($\pm$ 0.5%) was reached. Results were calculated using the Mie theory and presented as: D[4,3] and *Span,* which is a measurement of the width of the distribution calculated as:

$$Span = \frac{D_{v0.9} - D_{v0.1}}{D_{v0.5}}$$

Soluble protein content quantification by Bradford assay

The Bradford protein assay was performed in order to determine the soluble protein content (SPC) of the samples after heat treatment. In order to do this, an aliquot (2 mL) of the samples were transferred to 2 mL Eppendorf tubes (Eppendorf, Hamburg, Germany) and centrifuged at 12,000 g for 20 min at room temperature using a Centrifuge 5418 (Eppendorf, Hamburg, Germany). The weights of sample and supernatant were recorded in order to calculate the conversion factor (CF) of the protein distribution. The CF can be calculated as follows:

$$CF = \frac{M_{supernatant}}{M_{sample}}$$

Where $M_{supernatant}$ is the mass of the supernatant (g) and $M_{sample}$ is the total mass of the sample in the Eppendorf tube (g).

The supernatant of heat treated protein-based dispersions were diluted to different extents in order to ensure that their absorbance fitted within the calibration curve. An aliquot (40 $\mu$L) of the diluted supernatant was transferred to 4 ml cuvettes containing 2 ml of 5x diluted protein assay dye reagent concentrate (Cat. # 500-0006, Bio-Rad Laboratories GmbH, Munich, Germany), this was done in duplicate for all diluted supernatants.

The standard solutions used to build the calibration curves were prepared as follows: a stock solution was prepared by dissolving pea protein in Milli-Q water to a concentration of 0.25 wt% protein, and this was diluted to different extents (i.e. 0.20, 0.15, 0.10 and 0.05 wt%, protein). An aliquot (40 $\mu$L) of each of these solutions was transferred to 4 ml cuvettes containing 2 ml of the 5x diluted dye reagent concentrate. The blank was prepared by adding Milli-Q water (40 $\mu$L) to a 4 ml cuvette containing 2 ml of the 5x diluted dye reagent concentrate. Before the analysis, the cuvettes containing the samples, the standard solutions or the blank were sealed with a lid and manually shaken. All the spectrophotometric readings were performed at 595 nm against the blank using a UV-Visible spectrophotometer (Nicolet Evolution 100, Thermo Electron Corporation, Walthan, MA, USA), 20 min after the samples were prepared. The values of the standards absorbance were used to calculate the calibration curve. The absorbance values of the standard solutions were used to build the calibration curve and this was used to determine the protein content of the supernatant ($PC_{supernatant}$) expressed in wt%.

The soluble protein content ($PC_{soluble}$) expressed in wt% was calculated as follows

$$PC_{Soluble} = \frac{PC_{supernatent}}{PC_{sample}} \times CF \times 100\%$$

Where $PC_{sample}$ is the initial protein content of the sample before centrifugation [wt.%].

Free calcium determination

The calcium ion activity or free ionic calcium concentration of the protein-based dispersions heat treated in the presence of calcium was measured under magnetic stirring at 20°C using a calcium-ion-selective electrode (692 pH/Ion Meter, Metrohm, Herisau, Switzerland) and calculated from a calibration curve using $CaCl_2$ solutions in the range 1-10 mM. The effect of the ionic strength due to the salts present in the pea protein ingredient on the free calcium concentration was negligible. The results are presented as bound calcium, calculated as: added calcium - free ionic calcium.

Viscosity by controlled shear-stress rheometry

Flow curve measurements were performed using a controlled shear-stress rheometer (Physica MCR 501, Anton Paar GmbH, Graz, Austria) on the heat treated protein-based dispersions. A concentric cylinder geometry (CC27/S, Anton Paar GmbH, Graz, Austria) with a rough (sandblasted) surface to prevent wall slip and a gap with the outer cup (C-CC27/T200/SS/S, Anton Paar GmbH, Graz, Austria) of 1.13 mm was used for the measurements. The samples (25 mL) were shaken manually in order to homogenize them and poured into the cup. A Peltier plate (C-PTD200, Anton Paar GmbH, Graz, Austria) was used to keep a constant temperature of 25°C during the measurement.

The dispersions were initially sheared for 5 min at a shear rate of 100 $s^{-1}$, after which the measurement was performed. This was done by increasing the shear rate from 0.1 to 100 $s^{-1}$ and measuring the apparent viscosity every 30 seconds for 7.5 min, resulting in 15 data points. In order to compare the samples, their apparent viscosity at 13.9 $s^{-1}$ was recorded. Each measurement was performed in duplicate.

Example 1: Influence of $Ca^{2+}$ addition on the heat-induced aggregation

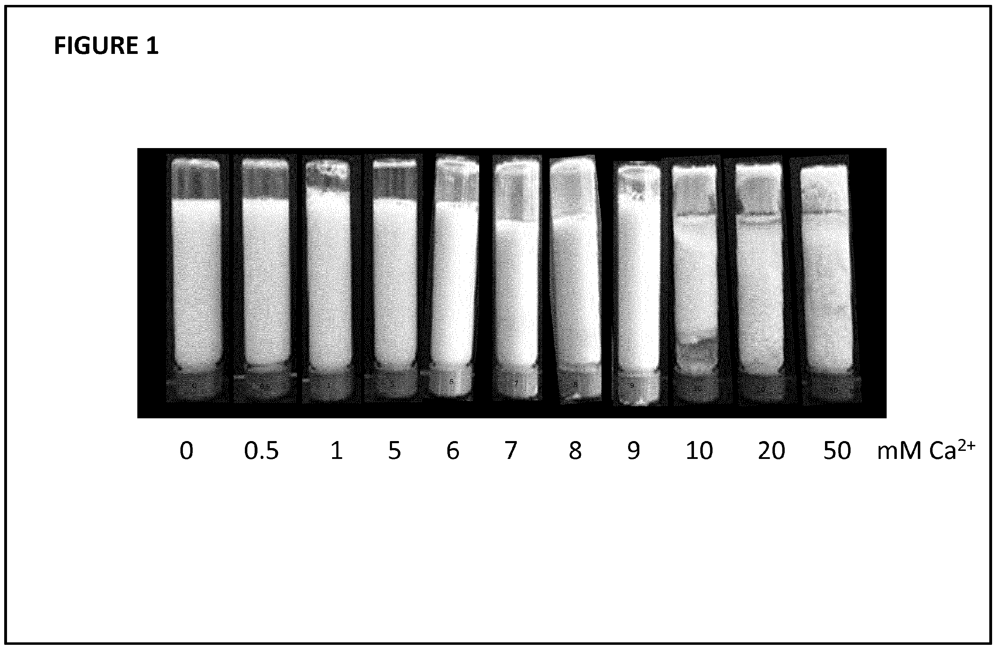

The influence of $Ca^{2+}$ addition on the heat-induced aggregation of pea protein was investigated in order to understand how and to which extent this charged co-solute influences the physicochemical and functional properties of the resulting protein-based systems. A screening of the gelation point as influence by $Ca^{2+}$ addition (0-10 mM) at a protein concentration of 3.5 wt% was performed (Figure 1). The critical $Ca^{2+}$ concentration promoting gelation was 10 mM. In this system, added $Ca^{2+}$ was all available to complex with pea protein as there were no ingredients competing to complex the $Ca^{2+}$.

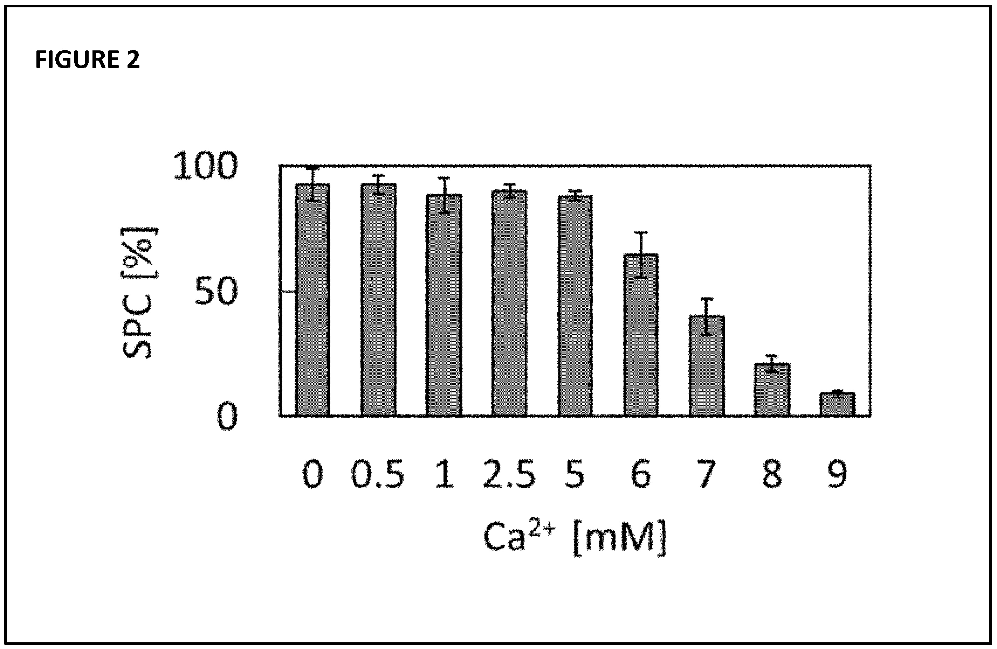

The next step was to investigate physicochemical properties such as soluble protein content (SPC) and particle size distribution (PSD) of the pea protein-based systems below its gelation threshold. The SPC gives information about the amount of protein in the aggregated state, e.g. samples with a high SPC have a low amount of proteins aggregates and *vice versa.* In order to obtain information about the influence of $Ca^{2+}$ on the SPC, the Bradford assay was performed on the heat-treated pea protein samples (Figure 2). Calcium addition had no effect on protein solubility up to a concentration of 5 mM, while above 5 mM the solubility decreased with increasing concentrations of $Ca^{2+}$ to a minimum solubility of 9%.

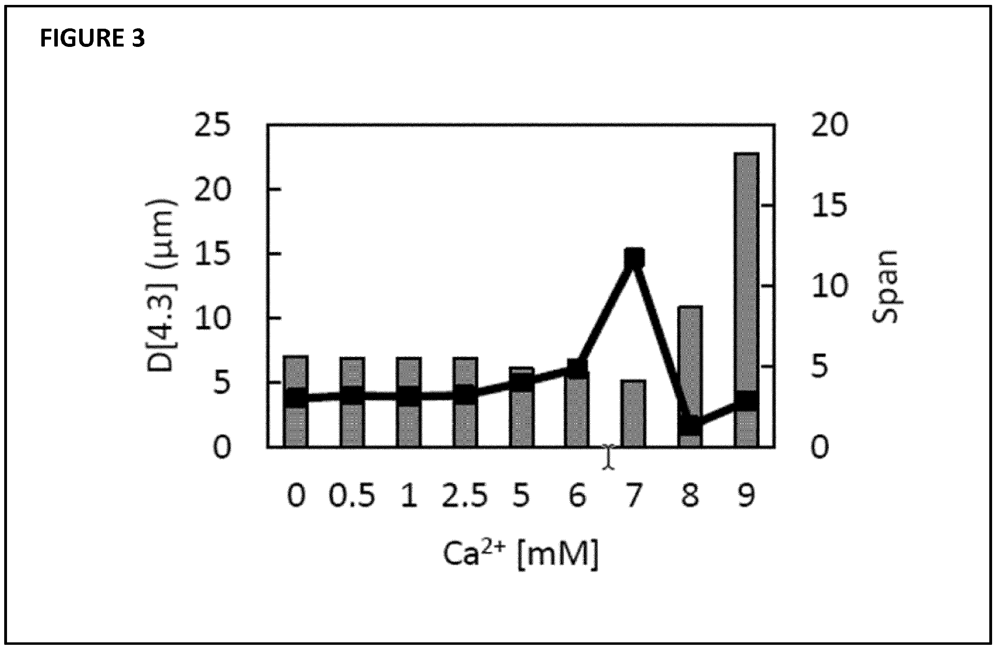

The particle size distribution (PSD) of the pea protein-based systems heat treated in the presence of calcium was measured by laser diffraction and the results are reported as D[4,3], which reflects the size of those particles that constitute the bulk of the sample volume and is more sensitive to the presence of large particulates, and span, which provides insight on the width of the size distribution (Figure 3). Calcium addition had no major effect on the D[4,3] (5-7 $\mu$m) up to a calcium concentration of 7 mM, while at 8 and 9 mM the D[4,3] increased to 11 and 23 $\mu$m respectively and the span showed a sharp decrease (<3). Samples at up to 7 mM had a bimodal distribution, but the samples at 8 and 9 mM had a unimodal particle size distribution.

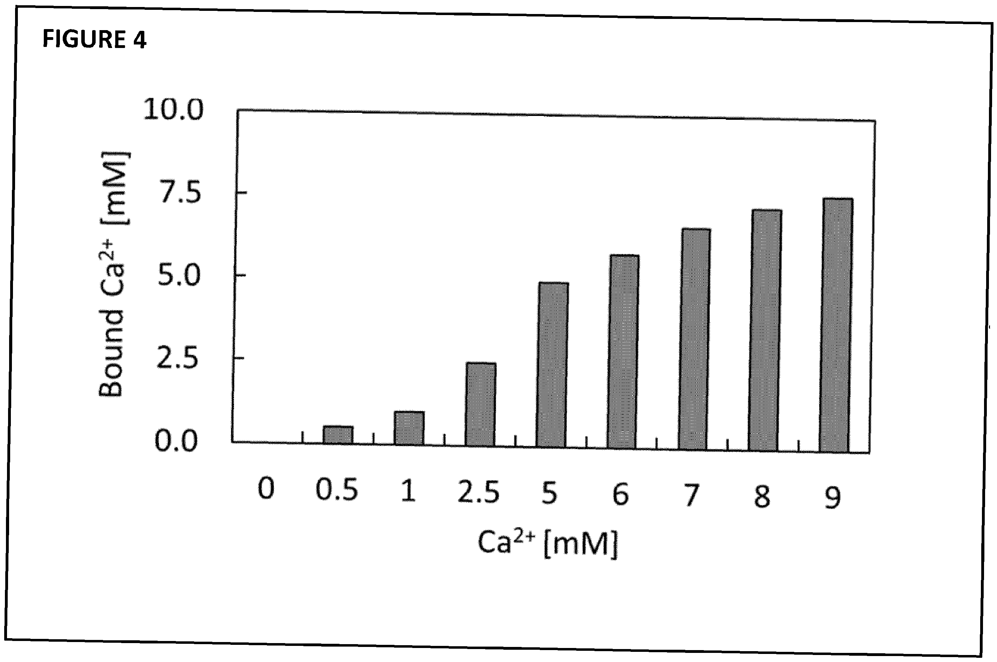

The amount of free $Ca^{2+}$ was used to calculate the amount of bound $Ca^{2+}$. Figure 4 shows that all the $Ca^{2+}$ was bound up to a concentration of 7 mM added $Ca^{2+}$, after which some free $Ca^{2+}$ was present indicating that the surface of the proteins was fully saturated with calcium ions and that charge neutralization was acheived.

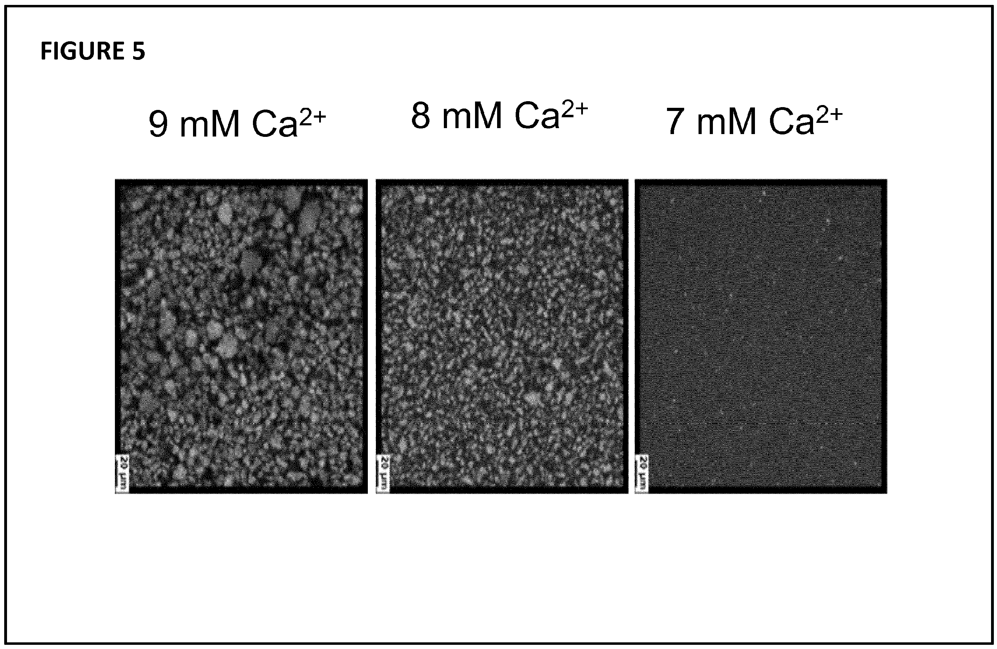

Confocal laser light microscopy images (Fig 5) confirmed the presence of aggregates for pea protein dispersions heated in the presence of 8 and 9 mM added $Ca^{2+}$, and in particular the very homogeneous distribution of those heated in the presence of 8 mM $Ca^{2+}$. These results correlate with the particle size measurements.

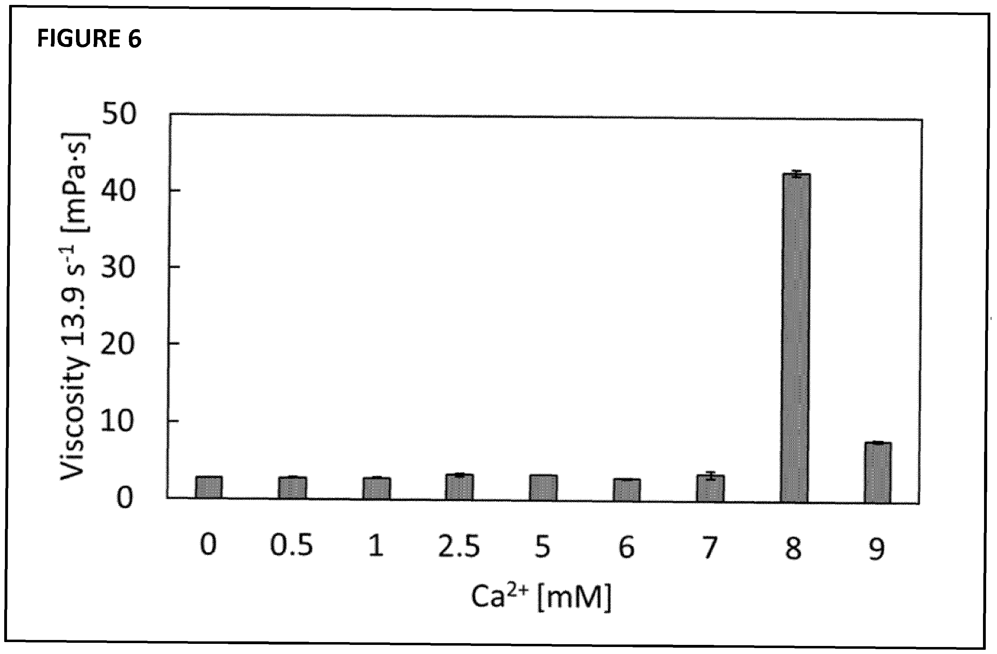

The viscosity results of the samples at 13.9 $s^{-1}$ are shown in Figure 6. A considerable increase in viscosity was observed at 3.5 wt% protein in the presence of 8 mM added $Ca^{2+}$, i.e. from 3 mPa.s to 43 mPa.s, but this decreased to 8 mPa.s in the presence of 9 mM added $Ca^{2+}$.

Due to the interesting properties of the aggregates formed *via* heat treatment of 3.5 wt% pea protein in the presence of 8 mM added $Ca^{2+}$, a 3 week stability test was performed. The results showed no changes in PSD and viscosity during storage at 4°C, thereby indicating that the aggregates were stable over time.

These results surprisingly indicate that there is an optimum level of divalent cation addition at which a dramatic viscosity increase can be obtained. The aggregates formed at this optimum level have a relatively small average particle size and a monodisperse narrow distribution. These physical parameters demonstrate that the agglomerates provide an excellent means of thickening food or beverage products without having a particle size distribution that would lead to a gritty texture.

## Claims

1.  A method of producing a food or beverage product, the method comprising;

    providing an aqueous ingredient composition comprising pea protein at a concentration of 1.0 to 6 wt.%;
    adding to the ingredient composition 4.0 to 20 mM of divalent cations available to complex the pea protein; and
    subsequently heat treating the ingredient composition at a pH of 6.6 to 7.3 to form agglomerates comprising pea protein,
    wherein the heat treatment is performed at a temperature of 80 °C to 125 °C for a period of 30 seconds to 20 minutes, or at a temperature of above 125 °C for 3 to 45 seconds.

2.  A method according to claim 1 wherein the agglomerates have a D[4,3] mean diameter as measured by laser diffraction of 2 to 50 microns.

3.  A method according to claim 1 or 2 wherein the ingredient composition is subjected to homogenization.

4.  A method according to any one of claims 1 to 3 wherein the pea protein is a pea protein isolate.

5. A method according to any one of claims 1 to 4 wherein the divalent cations are selected from the group consisting of calcium cations, magnesium cations and combinations thereof.

6. A method according to any one of claims 1 to 5 wherein the divalent cations are provided as a salt with an anion selected from the group consisting of chloride, hydroxide, carbonate, bicarbonate, phosphate, stearate, malate, glycerophosphate, lactate, acetate, fumarate and gluconate.

7. A method according to any one of claims 1 to 6 wherein the ingredient composition after heat treatment has a total solids content of 2 to 35 %.

8. A method according to any one of claims 1 to 7 wherein the content of soluble protein in the final product is below or equal to 80 wt.% in relation to the total protein content.

9. A method according to any one of claims 1 to 8 wherein the heat treated ingredient composition is dried into powder by means of freeze drying, spray drying or roller-drying.

10. A food or beverage product comprising calcium or magnesium and agglomerated pea protein, the agglomerated pea protein having a D[4,3] mean diameter as measured by laser diffraction of 2 to 50 microns and a particle size distribution span (Dv0.9-Dv0.1)/Dv0.5 of 0.1 to 10.

11. A food or beverage product according to claim 10 wherein the food or beverage product is a liquid and comprises pea protein at a concentration of 1.0 to 6 wt. %.

12. A food or beverage product according to claim 10 or claim 11 wherein the food or beverage product is a creamer.

13. A food or beverage product according to claim 10 or claim 11 wherein the food or beverage product is a ready-to-drink beverage product.

14. A food or beverage product according to claim 10 or claim 11 wherein the food or beverage product is a culinary sauce.

**Patentansprüche**

1. Verfahren zum Produzieren eines Lebensmittel- oder Getränkeprodukts, das Verfahren umfassend;

Bereitstellen einer wässrigen Inhaltsstoffzusammensetzung, umfassend ein Erbsenprotein in einer Konzentration von 1,0 bis 6 Gew.-%;
Hinzufügen, zu der Inhaltsstoffzusammensetzung, von 4,0 bis 20 mM zweiwertiger Kationen, die verfügbar sind, um das Erbsenprotein zu komplexieren; und
anschließendes Wärmebehandeln der Inhaltsstoffzusammensetzung bei einem pH-Wert von 6,6 bis 7,3, um Agglomerate, umfassend Erbsenprotein, auszubilden,
wobei die Wärmebehandlung bei einer Temperatur von 80 °C bis 125 °C für einen Zeitraum von 30 Sekunden bis 20 Minuten oder bei einer Temperatur von über 125 °C für 3 bis 45 Sekunden durchgeführt wird.

2. Verfahren nach Anspruch 1, wobei die Agglomerate einen mittleren Durchmesser D[4,3], wie durch Laserbeugung gemessen, von 2 bis 50 Mikrometer aufweisen.

3. Verfahren nach Anspruch 1 oder 2, wobei die Inhaltsstoffzusammensetzung einer Homogenisierung unterzogen wird.

4. Verfahren nach einem der Ansprüche 1 bis 3, wobei das Erbsenprotein ein Erbsenproteinisolat ist.

5. Verfahren nach einem der Ansprüche 1 bis 4, wobei die zweiwertigen Kationen aus der Gruppe ausgewählt sind, bestehend aus Calciumkationen, Magnesiumkationen und Kombinationen davon.

6. Verfahren nach einem der Ansprüche 1 bis 5, wobei die zweiwertigen Kationen als ein Salz mit einem Anion bereitgestellt werden, das aus der Gruppe ausgewählt ist, bestehend aus Chlorid, Hydroxid, Carbonat, Bicarbonat, Phosphat, Stearat, Malat, Glycerophosphat, Lactat, Acetat, Fumarat und Gluconat.

7. Verfahren nach einem der Ansprüche 1 bis 6, wobei die Inhaltsstoffzusammensetzung nach der Wärmebehandlung einen Gesamtfeststoffgehalt von 2 bis 35 % aufweist.

8. Verfahren nach einem der Ansprüche 1 bis 7, wobei der Gehalt von löslichem Protein in dem Endprodukt unter oder gleich 80 Gew.-% in Relation zu dem Gesamtproteingehalt ist.

9. Verfahren nach einem der Ansprüche 1 bis 8, wobei die wärmebehandelte Inhaltsstoffzusammensetzung mittels Gefriertrocknen, Sprühtrocknen oder Walzentrocknen zu Pulver getrocknet wird.

10. Lebensmittel- oder Getränkeprodukt, umfassend Calcium oder Magnesium und agglomeriertes Erbsenprotein, wobei das agglomerierte Erbsenprotein einen mittleren Durchmesser D[4,3], wie durch Laserbeugung gemessen, von 2 bis 50 Mikrometer und eine Partikelgrößenverteilungsspanne (Dv0,9-Dv0,1)/Dv0,5 von 0,1 bis 10 aufweist.

11. Lebensmittel- oder Getränkeprodukt nach Anspruch 10, wobei das Lebensmittel- oder Getränkeprodukt eine Flüssigkeit ist und Erbsenprotein in einer Konzentration von 1,0 bis 6 Gew. % umfasst.

12. Lebensmittel- oder Getränkeprodukt nach Anspruch 10 oder 11, wobei das Lebensmittel- oder Getränkeprodukt ein Kaffeeweißer ist.

13. Lebensmittel- oder Getränkeprodukt nach Anspruch 10 oder 11, wobei das Lebensmittel- oder Getränkeprodukt ein trinkfertiges Getränkeprodukt ist.

14. Lebensmittel- oder Getränkeprodukt nach Anspruch 10 oder 11, wobei das Lebensmittel- oder Getränkeprodukt eine Speisesauce ist.


**Revendications**

1. Procédé de production d'un produit alimentaire ou de boisson, le procédé comprenant ;

   la fourniture d'une composition d'ingrédient aqueuse comprenant des protéines de pois à une concentration de 1,0 à 6 % en poids ;
   l'ajout à la composition d'ingrédient de 4,0 à 20 mM de cations divalents disponibles pour complexer les protéines de pois ; et
   le traitement thermique ultérieur de la composition d'ingrédient à un pH de 6,6 à 7,3 pour former des agglomérats comprenant des protéines de pois,
   dans lequel le traitement thermique est effectué à une température de 80 °C à 125 °C pendant une période de 30 secondes à 20 minutes, ou à une température supérieure à 125 °C pendant 3 à 45 secondes.

2. Procédé selon la revendication 1, dans lequel les agglomérats ont un diamètre moyen D[4,3] tel que mesuré par diffraction laser de 2 à 50 microns.

3. Procédé selon la revendication 1 ou 2, dans lequel la composition d'ingrédient est soumise à une homogénéisation.

4. Procédé selon l'une quelconque des revendications 1 à 3, dans lequel les protéines de pois sont un isolat de protéines de pois.

5. Procédé selon l'une quelconque des revendications 1 à 4, dans lequel les cations divalents sont choisis dans le groupe constitué de cations de calcium, cations de magnésium et des combinaisons de ceux-ci.

6. Procédé selon l'une quelconque des revendications 1 à 5, dans lequel les cations divalents sont fournis sous forme de sel avec un anion choisi dans le groupe constitué de chlorure, hydroxyde, carbonate, bicarbonate, phosphate, stéarate, malate, glycérophosphate, lactate, acétate, fumarate et gluconate.

7. Procédé selon l'une quelconque des revendications 1 à 6, dans lequel la composition d'ingrédient après traitement thermique a une teneur totale en solides de 2 à 35 %.

8. Procédé selon l'une quelconque des revendications 1 à 7, dans lequel la teneur en protéines solubles dans le produit final est inférieure ou égale à 80 % par rapport à la teneur totale en protéines.

9. Procédé selon l'une quelconque des revendications 1 à 8, dans lequel la composition d'ingrédient traitée thermiquement est séchée en poudre par lyophilisation, séchage par pulvérisation ou séchage sur cylindres.

10. Produit alimentaire ou de boisson comprenant du calcium ou du magnésium et des protéines de pois agglomérées, les protéines de pois agglomérées ayant un diamètre moyen D[4,3] mesuré par diffraction laser de 2 à 50 microns et une plage de distribution granulométrique (Dv0,9 - Dv0,1)/Dv0,5 de 0,1 à 10.

11. Produit alimentaire ou de boisson selon la revendication 10, dans lequel le produit alimentaire ou de boisson est un liquide et comprend des protéines de pois à une concentration de 1,0 à 6 % en poids.

12. Produit alimentaire ou de boisson selon la revendication 10 ou la revendication 11, dans lequel le produit alimentaire ou de boisson est un crémier.

13. Produit alimentaire ou de boisson selon la revendication 10 ou la revendication 11, dans lequel le produit alimentaire ou de boisson est un produit prêt-à-boire.

14. Produit alimentaire ou de boisson selon la revendication 10 ou la revendication 11, dans lequel le produit alimentaire ou de boisson est une sauce culinaire.

EP 3 890 513 B1

# FIGURE 1

0    0.5    1    5    6    7    8    9    10    20    50    mM Ca$^{2+}$

EP 3 890 513 B1

**FIGURE 2**

**FIGURE 3**

FIGURE 4

EP 3 890 513 B1

FIGURE 5

9 mM Ca$^{2+}$     8 mM Ca$^{2+}$     7 mM Ca$^{2+}$

EP 3 890 513 B1

16

FIGURE 6

EP 3 890 513 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002039617 A1